(19) **Europäisches Patentamt**
**European Patent Office**
**Office européen des brevets**

(11) **EP 4 016 119 A1**

(12) **EUROPEAN PATENT APPLICATION**

(43) Date of publication:
**22.06.2022 Bulletin 2022/25**

(21) Application number: **20216035.4**

(22) Date of filing: **21.12.2020**

(51) International Patent Classification (IPC):
**G01S 7/292** (2006.01)   **G01F 23/296** (2022.01)
**G01S 7/295** (2006.01)   **G01S 7/527** (2006.01)
**G01S 7/53** (2006.01)   **G01N 29/44** (2006.01)

(52) Cooperative Patent Classification (CPC):
**G01S 7/527; G01F 23/2962; G01S 7/292;
G01S 7/295; G01S 7/53**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Siemens Aktiengesellschaft
80333 München (DE)**

(72) Inventors:
• **Liu, Jing**
**Peterborough, K9L 0A6 (CA)**
• **Shoeb, Mohamed**
**North York, M2L 2T2 (CA)**

(54) **A METHOD FOR PROCESSING AN ECHO PROFILE OF A LEVEL TRANSMITTER IN AN INDUSTRIAL FACILITY**

(57) The current disclosure describes a method for processing an echo profile of a level transmitter. The method comprises obtaining an echo profile, wherein the echo profile includes a plurality of values indicative of background noise in the industrial facility and one or more echo components, and generating a second echo profile from a corresponding section of the echo profile, wherein the second echo profile comprising a plurality of values, each value associated with a corresponding value in the echo profile. Each value of the second echo profile is calculated using a first window of one or more values from the echo profile and a second window of one or more values from the echo profile, wherein the first window and second window are selected on the basis of the corresponding value in the echo profile. Accordingly, by generating the second echo profile, the detectability of the echo is improved.

FIG 1

EP 4 016 119 A1

**Description**

Background

The current disclosure relates to level transmitters and more particularly in relation to processing on signals from the level transmitters. Level transmitters are used in industrial facilities for measurement of level of material in storage containers, tanks, etc. There are several types of level transmitters which may be used for this purpose. One such type relates to non contact level transmitters which measure the level based on reflection of a measurement signal transmitted signal from the level transmitter. This type of level transmitters includes ultrasonic transmitters, radar transmitters, etc.

Description

The current disclosure relates to level transmitters and more particularly to non contact level transmitters based on measurement of reflection of signals, such as ultrasound and radar transmitters. More particularly, these transmitters based on the presence of the echo in the reflected signal to determine the level. In certain cases, such level transmitters may have some issues in accurate determination of the level of the material in the storage area. Especially, in industrial applications such storage of solid material, it may be particularly challenging in efficient determination of level due to heavy distortion due to multipath environment.

Accordingly, the signal profile generated by the level transmitter can often be seriously distorted, and echoes become hard to recognize. These echoes represent the measurement target, and this makes the level detection challenging. Accordingly, there is a need for a method and device which is capable of addressing the above mentioned issue and is able to identify the echoes from the distorted echo profile without modification of the hardware of the level transmitter. Accordingly, the current disclosure describes a method for processing an echo profile of a level transmitter in an industrial facility. The method comprises obtaining an echo profile, wherein the echo profile includes a plurality of values indicative of background noise in the industrial facility and one or more echo components, and generating a second echo profile from a corresponding section of the echo profile, wherein the second echo profile comprising a plurality of values, each value associated with a corresponding value in the echo profile. Each value of the second echo profile is calculated using a first window of one or more values from the echo profile and a second window of one or more values from the echo profile, wherein the first window of values and the second window of values are selected on the basis of the corresponding value in the echo profile. Accordingly, by generating the second echo profile, the detectability of the echo is improved and accordingly allows for accurate determination of the level.

In an example, the method further comprises padding a start and end of the corresponding section of echo profile using a predetermined set of values. In an example, a length of the first window is determined based on an application associated with the level transmitter and a length of the second window is determined based on a predefined echo parameter associated with the level transmitter. In an example the corresponding value in the echo profile lies in the middle of at least one of the first window and the second window. In an example, the first echo profile is generated by two or more reflections of a signal transmitted by the level transmitter.

In an example, the method further comprises generating a third echo profile from the second echo profile, wherein the third echo profile comprising a plurality of values, each value of the third echo profile associated with a corresponding value in the second echo profile; wherein each value of the third echo profile is calculated using a third window of one or more values from the second echo profile and a fourth window of one or more values from the second echo profile, wherein the third window of values and the fourth window of values are selected on the basis of the corresponding value in the second echo profile. In an example the method further comprises determining a convergence parameter based on the second echo profile and the third echo profile.

In another aspect, the current disclosure describes a non transitory storage medium for processing an echo profile of a level transmitter in an industrial facility. The non transitory storage medium comprises a plurality of instructions which when executed on one or more processors, cause the one or more processors to obtain an echo profile, wherein the echo profile includes a plurality of values indicative of background noise in the industrial facility and one or more echo components and generate a second echo profile from a corresponding section of the echo profile, wherein the second echo profile comprising a plurality of values, each value associated with a corresponding value in the echo profile, and wherein each value of the second echo profile is calculated using a first window of one or more values from the echo profile and a second window of one or more values from the echo profile. The first window of values and the second window of values are selected on the basis of the corresponding value in the echo profile.

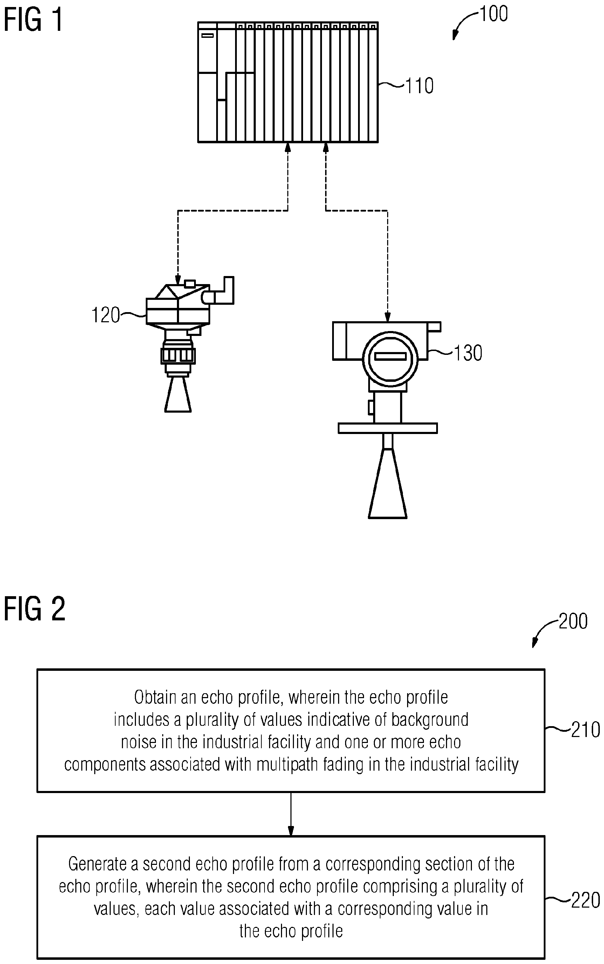

In another aspect, the current disclosure describes an industrial device for processing an echo profile of a level transmitter in an industrial facility. The industrial device comprises a network interface for transmitting and receiving data with one or more industrial devices in the industrial facility and one or more processors coupled to a memory module containing a plurality of instructions, wherein the one or more processors are configured to obtain an echo profile, wherein the echo profile includes a plurality of values indicative of background noise in the industrial facility and one or more echo components, and generate a second echo profile from a corresponding section of the echo profile, wherein the second echo profile comprising a plurality of values, each value associated with a corresponding value in the echo profile. Each value of the second echo profile is calculated using a first window of one or more values from the echo profile and a second window of one or more values from the echo profile, wherein the first window of values and the second window of values are selected on the basis of the corresponding value in the echo profile. The advantages of the methods apply to the devices described herein. These aspects are further described in relation figures 1-5.

The following detailed description references the drawings, wherein:

Figure 1 illustrates a plurality of level transmitters 120 and 130 connected to a controller 110;

Figure 2 illustrates a method for processing an echo profile of a level transmitter in an industrial facility;

Figure 3 illustrates a first echo profile and a second echo profile generated in accordance to the example method;

Figure 4 illustrates a second echo profile and a third echo profile generated in accordance to the example method; and

Figure 5 illustrates an example industrial device graph for processing an echo profile of a level transmitter in an industrial facility.

Figure 1 illustrates a plurality of level transmitters 120 and 130 connected to a controller 110. The level transmitters 120 and 130 are configured to measure a level of material in corresponding storage containers or tanks (not shown in figure 1). In an example, the level transmitter 120 is an ultrasonic level transmitter. Accordingly, the level transmitter 120 includes an ultrasonic transducer/transreceiver mounted at, or near the top of the corresponding storage container. The level transmitter 120 sends out an ultrasonic pulse or signal, which hits the surface of the liquid, gets reflected and is received by the level transmitter 120. Then based on the echo generated by the reflection of the transmitted signals, the level transmitter 120 then calculates the level in the corresponding storage container based on the time between the transmitted and received signal. Similarly, in another example, the level transmitter 130 is a radar level transmitter which determines the level on the basis of the echo similar to the ultrasonic level transmitter 120. The controller 110 is configured to receive the determined level measurement from the level transmitter (120 or 130) and then control one or more process equipment. For example, based on the measurement of the level, the controller 110 is configured to regulate one or more input and output valves of the storage container associated with the corresponding level transmitter (120 or 130).

In certain applications, the reflected signal is significantly distorted and accordingly determination of the echo is often challenging. For example, when the material stored in the storage container is a solid, the reflected signal is heavily distorted due to multipath environment. Similarly, when the material stored in the storage container includes foam or other such multi-phase mediums, the reflected signal is often too noisy and accordingly determination of the echo in the reflected signal is challenging and can result in inaccurate determination of the level of the material in the storage container.

Often, the distorted signal contains significant noise and a plurality of peaks and accordingly, the echo profile generated, is processed for the determination of the real echo. In an example, processing of the echo profile is performed by the corresponding level transmitter. In another example, the controller 110 is configured to process the echo profile for the determination of the reach echo. This is further described in the figure 2.

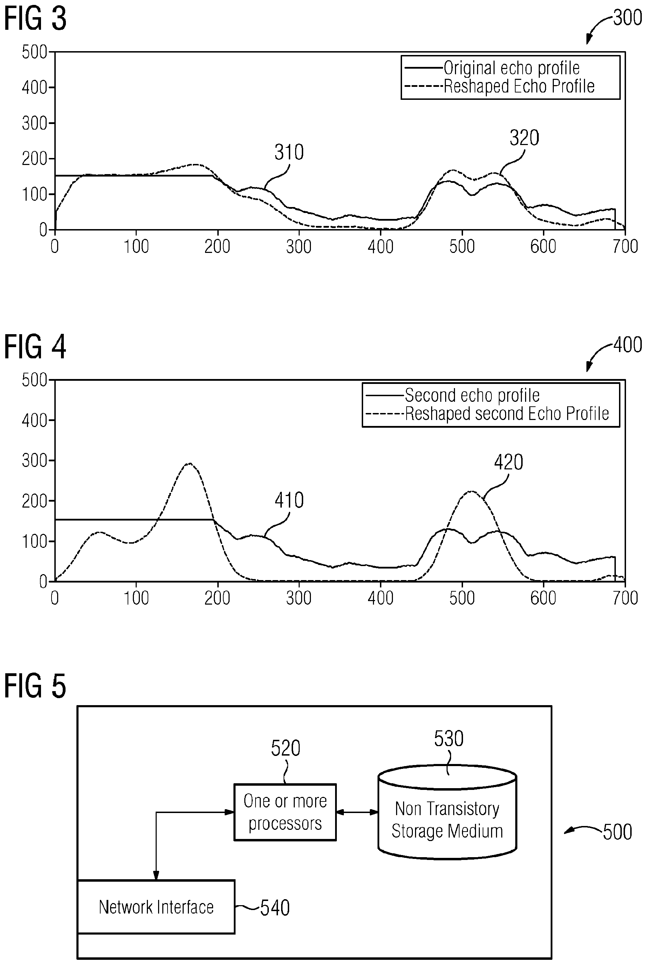

Figure 2 illustrates a method 200 for processing an echo profile of a level transmitter in an industrial facility. In an example, the method 200 is performed by the level transmitter 120. At step 210, the level transmitter 120 obtains an echo profile. The echo profile includes a plurality of values indicative of background noise in the industrial facility and one or more echo components. An example echo profile 310 is illustrated in figure 300. As shown in the figure 3, the echo profile 310 comprises a plurality of values indicative of the power of reflected signal in decibels. In an example, the echo profile is generated by two or more reflections of the measurement signal transmitted by the level transmitter. In an example, the method 200 further comprises padding a start and end of the corresponding section of echo profile 310, using a predetermined set of values. For example, as shown in the figure 3, the echo profile 310 includes 700 sample values. In an example, a predetermined set of null values (i.e. values of zero decibel) are added to echo profile before the value 0 and to the echo profile after the value 700. Then, at step 220, the level transmitter 120 generates a second echo profile 320 from a corresponding section of the echo profile 310. The second echo profile 320 is generated in relation to a particular section of the echo profile 310. In an example, the entire length of the echo profile 310 is used to generate the second echo profile 320. In another example, the initial set of values till a predetermined threshold are ignored and the reminder of the echo profile 310 is used to generate the second echo profile 320. For example, the first 100 values of the echo profile 310 are excluded and the remaining samples from 101 to 700 are used for generating the second echo profile 320.

Then, for each value in the corresponding section of the echo profile 310, a corresponding value in the second echo profile 320 is generated. Each echo profile can be understood as an array comprising plurality of values or a time series. For calculating the value in the second echo profile 320, a first window of values is selected based on the corresponding value in the echo profile 310. Similarly, a second window of values is selected based on the corresponding value in the echo profile 310. For example, for a sample value 201 in the echo profile 310, a corresponding value 201 in the second echo profile 320 is calculated based on a first window of values and a second window of values based on the sample value 201. The first window of values includes a set of values from the echo profile 310 which are within proximity of the corresponding value (i.e. sample value 201). For example, where the length of the first window is set to 200 values, the first window includes 100 values ahead of the corresponding sample value 201 in echo profile 310 and 100 values after the corresponding sample value 201 in the echo. Accordingly, the corresponding sample value 201 is located within the middle of the first window. Similarly, the second window of values includes a set of values from the echo profile 310 which are within proximity of the corresponding value (i.e. sample value 201). For example, where the length of the second window is set to 100 values, the first second includes 50 values ahead of the corresponding sample value 201 in echo profile 310 and 50 values after the corresponding sample value 201 in the echo. Accordingly, the corresponding sample value 201 is located within the middle of the second window.

Subsequent to the determination of the first window of values and the second window of values, the level transmitter 120 determines a concentric power ratio based on the first window of values and the second window of values. In an example, the concentric power ratio is calculated by dividing the sum of the values in the first window and the sum of the values in the second window. For example where the first echo profile is a timeseries of 'K' Values:

$$
\mathcal{J}_i[k] = \begin{cases} \beta_i[k] \dfrac{\sum_{w=k-W_S}^{k+W_S} E_i[w]}{\sum_{w=k-W_L}^{k+W_L} E_i[w]} & \sum_{w=k-W_L}^{k+W_L} E_i[w] > 0 \\[4mm] 0 & \sum_{w=k-W_L}^{k+W_L} E_i[w] = 0 \end{cases}
$$

Wherein:

$E_i$ represents the first echo profile i.e. time series with K values;
$W_L$ represents the length of the first window;
$W_s$ represents the length of the second window;

$\mathcal{J}_i$ represents the second echo profile generated from the first echo profile; and

$$
\beta_i[k] = \frac{\sum_{w=k-W_L}^{k+W_L} E_i[w]}{2 * W_S + 1}
$$

Then, the value of the second echo profile is calculated using a normalized value (shown above as series $\beta_i$ from the first window of values and the concentric power ratio. This calculation of values is performed for each value in the echo profile 310 to calculate a corresponding value in the second echo profile. Accordingly, while the length of the echo profile 310 and 320 are the same, the values are different. Through the usage of the concentric power ratio, the energy concentration in the second echo profile is improved and accordingly, the likelihood of detecting the echo is improved. In an embodiment, the above method 200 is repeated with the output echo profile (generated by one iteration) as the input echo profile (for the subsequent iteration). For example, the method 200 further comprises generating a third echo profile 420 from the second echo profile 410 (illustrated in figure 4). For each value in the second echo profile 410, a corresponding value in the third echo profile 420 is generated. For calculating the value in the third echo profile 420, a first window of values is selected based on the corresponding value in the second echo profile 410. Similarly, a second window of values is selected based on the corresponding value in the second echo profile 410. Then based on the first window of values and the second window of values, the value in the third echo profile 420. For example, for a sample value 201 in the second echo profile 410, a corresponding value 201 in the third echo profile 420 is calculated based on a first window of values and a second window of values based on the sample value 201 in the second echo profile. The first window of values includes a set of values from the second echo profile 410 which are within proximity of the corresponding value (i.e. sample value 201). For example, where the length of the first window is set to 200 values, the first window includes 100 values ahead of the corresponding sample value 201 in echo profile 410 and 100 values after the corresponding sample value 201 in the echo profile 410. Accordingly, the corresponding sample value 201 is located within the middle of the first window. Similarly, the second window of values includes a set of values from the second echo profile 410 which are within proximity of the corresponding value (i.e. sample value 201). For example, where the length of the second window is set to 100 values, the second window includes 50 values ahead of the corresponding sample value 201 in echo profile 410 and 50 values after the corresponding sample value 201 in the second echo profile 410. Accordingly, the corresponding sample value 201 is located within the middle of the second window. Subsequent to the determination of the first window of values and the second window of values, the level transmitter 120 determines a concentric power ratio based on the first window of values and the second window of values. In an example, the concentric power ratio is calculated by dividing the sum of the values in the first window and the sum of the values in the second window. Then, the value of the third echo profile 420 is calculated using a normalized value from the first window of values and the concentric power ratio. This calculation of values is performed for each value in the second echo profile 410 to calculate a corresponding value in the third echo profile 420. Accordingly, while the length of the echo profile 410 and 420 are the same, the values are different. Through the usage of the concentric power ratio, the energy concentration in the third echo profile is improved (as compared to the second echo profile 410) and accordingly, the likelihood of detecting the echo is improved.

In an example, the above method is carried on iteratively till the difference (also referred to as convergence parameter) between the input echo profile and the output echo profile is below a predetermined threshold. For example, the convergence parameter is a mean square error calculated between the input echo profile and the output echo profile. When the convergence parameter is below a predetermined threshold, the method is terminated and no further iterations are performed.

In an example, a length of the first window is determined based on an application associated with the level transmitter. In an example, based on the specifics of the application, the length of the first window is selected. For example, when the application is in relation to monitoring of liquid containers with foaming, the length of the first window is of a predetermined size. In another example, when the application is in relation to monitoring of liquids containers without foam, the length of the first window may be less than the predetermined size. In effect, a smaller window length may be chosen in cases where echo determination is usually accurate. In an example, the length of the first window is determined using an artificial intelligence technique. In an example, a length of the second window is determined based on a predefined echo parameter associated with the level transmitter. The predefined echo parameter is based on a predetermined value determined during the commissioning or manufacture of the level transmitter.

The present disclosure can take a form of a computer program product comprising computer-usable or computer-readable medium storing program code for use by or in connection with one or more computers, processing units, or instruction execution system. For example, the method 200 may be realized in a single device or across one or more devices.

Accordingly, the current disclosure describes an industrial device 500 for processing an echo profile of a level transmitter in an industrial facility. In an example, the industrial device 500 is the level transmitter itself. In an example, the industrial device is the controller 110. The industrial device 500 comprises a network interface 540 for transmitting and receiving data with one or more industrial devices in the industrial facility, and one or more processors 520 coupled to a memory module 540 (also referred to as non transitory storage medium 540). containing a plurality of instructions. Upon execution of the one or more instructions, the one or more processors 520 are configured to obtain an echo profile, wherein the echo profile includes a plurality of values indicative of background noise in the industrial facility and one or more echo components; and generate a second echo profile from a corresponding section of the echo profile, wherein the second echo profile comprising a plurality of values, each value associated with a corresponding value in the echo profile and wherein each value of the second echo profile is calculated using a first window of one or more values from the echo profile and a second window of one or more values from the echo profile, wherein the first window of values and the second window of values are selected on the basis of the corresponding value in the echo profile. For the purpose of this description, a computer-usable or computer-readable non-transitory storage medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, DVD and Blu ray.

Both processing units and program code for implementing each aspect of the technology can be centralized or distributed (or a combination thereof) as known to those skilled in the art.

While the current disclosure is described with references to few industrial devices, a plurality of industrial devices may be utilized in the context of the current disclosure. While the present disclosure has been described in detail with reference to certain embodiments, it should be appreciated that the present disclosure is not limited to those embodiments. In view of the present disclosure, many modifications and variations would be present themselves, to those skilled in the art without departing from the scope of the various embodiments of the present disclosure, as described herein. The scope of the present disclosure is, therefore, indicated by the following claims rather than by the foregoing description. All changes, modifications, and variations coming within the meaning and range of equivalency of the claims are to be considered within their scope. All advantageous embodiments claimed in method claims may also be applied to device/non transitory storage medium claims.

**Claims**

1. A method (200) for processing an echo profile (310) of a level transmitter (120) in an industrial facility, the method (200) comprising:

    a. Obtaining (210) an echo profile (310), wherein the echo profile (310) includes a plurality of values indicative of background noise in the industrial facility and one or more echo components;
    b. Generating (220) a second echo profile (320) from a corresponding section of the echo profile (310), wherein the second echo profile (320) comprising a plurality of values, each value in the second echo profile (320) associated with a corresponding value in the echo profile (310);

    wherein each value of the second echo profile (320) is calculated using a first window of one or more values from the echo profile (310) and a second window of one or more values from the echo profile (310), wherein the first window of values and the second window of values are selected on the basis of the corresponding value in the echo profile (310).

2. The method (200) as claimed in claim 1, wherein the method (200) further comprises padding a start and end of the corresponding section of echo profile (310) using a predetermined set of values.

3. The method (200) as claimed in claim 1, wherein a length of the first window is determined based on an application associated with the level transmitter (120) and wherein a length of the second window is determined based on a predefined echo parameter associated with the level transmitter (120).

4. The method (200) as claimed in claim 1, wherein the corresponding value in the echo profile (310) lies in the middle of at least one of the first window and the second window.

5. The method (200) as claimed in claim 1, wherein the echo profile (310) is generated by two or more reflections of a signal transmitted by the level transmitter (120).

6. The method (200) as claimed in claim 1, wherein the method (200) further comprises generating a third echo profile (420) from the second echo profile (410), wherein the third echo profile (430) comprising a plurality of values, each value of the third echo profile (430) associated with a corresponding value in the second echo profile (410); wherein each value of the third echo profile (420) is calculated using a third window of one or more values from the second echo profile (410) and a fourth window of one or more values from the second echo profile (410), wherein the third window of values and the fourth window of values are selected on the basis of the corresponding value in the second echo profile (410).

7. The method (200) as claimed in claim 6 wherein the method (200) further comprises determining a convergence parameter based on the second echo profile (410) and the third echo profile (420).

8. A non transitory storage medium (540) for processing an echo profile (310) of an level transmitter (120) in an industrial facility, the non transitory storage medium (540) comprising a plurality of instructions which when executed on one or more processors (520), cause the one or more processors (520) to:

    i. obtain an echo profile (310), wherein the echo profile (310) includes a plurality of values indicative of background noise in the industrial facility and one or more echo components;
    ii. generate a second echo profile (320) from a corresponding section of the echo profile (310), wherein the second echo profile (320) comprising a plurality of values, each value of the second echo profile (320) associated with a corresponding value in the echo profile (310);

    wherein each value of the second echo profile (320) is calculated using a first window of one or more values from the echo profile (310) and a second window of one or more values from the echo profile (310), wherein the first window of values and the second window of values are selected on the basis of the corresponding value in the echo profile (310).

9. An industrial device (500) for processing an echo profile (310) of a level transmitter (120) in an industrial facility, the industrial device (500) comprising:

a. a network interface (540) for transmitting and receiving data with one or more industrial devices in the industrial facility; and

b. one or more processors (520) coupled to a memory module (530) containing a plurality of instructions, wherein the one or more processors (520) are configured to:

i. obtain an echo profile (310), wherein the echo profile (310) includes a plurality of values indicative of background noise in the industrial facility and one or more echo components;

ii. generate a second echo profile (320) from a corresponding section of the echo profile (310), wherein the second echo profile (320) comprising a plurality of values, each value associated with a corresponding value in the echo profile (310);

wherein each value of the second echo profile (320) is calculated using a first window of one or more values from the echo profile (310) and a second window of one or more values from the echo profile (310), wherein the first window of values and the second window of values are selected on the basis of the corresponding value in the echo profile (310).

FIG 1

FIG 2

Obtain an echo profile, wherein the echo profile
includes a plurality of values indicative of background
noise in the industrial facility and one or more echo
components associated with multipath fading in the industrial facility

~210

Generate a second echo profile from a corresponding section of the
echo profile, wherein the second echo profile comprising a plurality of
values, each value associated with a corresponding value in
the echo profile

~220

FIG 3

FIG 4

FIG 5

Europäisches
Patentamt

European
Patent Office

Office européen
des brevets

## EUROPEAN SEARCH REPORT

**Application Number**

EP 20 21 6035

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 596 144 A (PANTON STANLEY [CA] ET AL) 24 June 1986 (1986-06-24) * abstract *; figures 1,2, 5-9 * * column 1, line 4 - column 3, line 20 * * column 3, line 40 - column 9, line 33 * ----- | 1-9 | INV. G01S7/292 G01F23/296 G01S7/295 G01S7/527 G01S7/53 G01N29/44 |
| X | DE 10 2017 123529 A1 (ENDRESS HAUSER SE CO KG [DE]) 11 April 2019 (2019-04-11) * the whole document * ----- | 1-9 | |

TECHNICAL FIELDS
SEARCHED      (IPC)

G01S
G01F
G01N

The present search report has been drawn up for all claims

| Place of search | Date of completion of the search | Examiner |
|---|---|---|
| Munich | 2 June 2021 | Zaneboni, Thomas |

EPO FORM 1503 03.82 (P04C01)

**ANNEX TO THE EUROPEAN SEARCH REPORT
ON EUROPEAN PATENT APPLICATION NO.**

EP 20 21 6035

This annex lists the patent family members relating to the patent documents cited in the above-mentioned European search report.
The members are as contained in the European Patent Office EDP file on
The European Patent Office is in no way liable for these particulars which are merely given for the purpose of information.

02-06-2021

| Patent document cited in search report | Publication date | Patent family member(s) | | Publication date |
|---|---|---|---|---|
| US 4596144 A | 24-06-1986 | CA | 1214858 A | 02-12-1986 |
| | | US | 4596144 A | 24-06-1986 |
| DE 102017123529 A1 | 11-04-2019 | CN | 111213039 A | 29-05-2020 |
| | | DE | 102017123529 A1 | 11-04-2019 |
| | | EP | 3695197 A1 | 19-08-2020 |
| | | WO | 2019072473 A1 | 18-04-2019 |

EPO FORM P0459

For more details about this annex : see Official Journal of the European Patent Office, No. 12/82